# EUROPÄISCHE PATENTSCHRIFT

(11) **EP 2 641 958 B1**
(45) Veröffentlichungstag und Bekanntmachung des Hinweises auf die Patenterteilung: **22.01.2020**
(21) Anmeldenummer: 13160057.9
(22) Anmeldetag: 19.03.2013
(51) Int. Cl.: C10B 47/44, C10J 3/66

(54) **Biomassevergaser**
Biomass gasifier
Gazéificateur de biomasse

(30) Priorität: 20.03.2012 DE 202012002872 U
(43) Veröffentlichungstag der Anmeldung: 25.09.2013
(73) Patentinhaber: Stadtwerke Rosenheim GmbH & Co. KG, 83022 Rosenheim (DE)
(72) Erfinder: Artmann, Klaus, 83064 Raubling (DE); Egeler, Reinhold, 83064 Raubling (DE); Kolbeck, Gerhard, 83254 Breitbrunn (DE); Schmidt, Christian, 83059 Kolbermoor (DE); Sewald, Wolfgang, 83026 Rosenheim (DE); Waller, Rolf, 83093 Bad Endorf (DE)
(74) Vertreter: Gritschneder, Sebastian

(56) Entgegenhaltungen:
- DE-A1-102010 012 487
- DE-A1-102010 018 197
- DE-T2- 69 307 572

## Beschreibung

### Technisches Gebiet

Die Erfindung betrifft ein Verfahren und eine Vorrichtung zur Gewinnung von Produktgas durch Vergasen von Biomasse, wobei die Biomasse über eine Zuführeinrichtung in einen Vergasungsreaktor gefördert wird, der eine Pyrolyseeinheit, eine Oxidationseinheit und eine Reduktionseinheit aufweist, die unmittelbar aufeinanderfolgend angeordnet sind. Die Biomasse wird in der Pyrolyseeinheit durch Wärme ausgegast und in Pyrolyseprodukte umgewandelt. Die Pyrolyseprodukte werden in der Oxidationseinheit unter Zuführung eines Vergasungsmittels teilweise verbrannt, und die Oxidationsprodukte werden in der Reduktionseinheit in Produktgas umgewandelt. Das Produktgas wird über eine Ableitung aus dem Vergasungsreaktor abgeführt.

### Stand der Technik

Die Biomassevergasung ist ein Prozess, bei dem feste Biomasse in ein Produkt- oder Brenngas umgewandelt wird. Ein geeignetes Verfahren zur Biomassevergasung ist in DE 10 2010 018 197 und WO 2011/134961 beschrieben. Dabei wird die Biomasse zunächst in einer Pyrolysezone unter Luftabschluss oder unter weitgehendem Luftmangel erhitzt, wobei sie unter Abgabe von Pyrolysegas, einem Gemisch aus Kohlenmonoxid, Wasserstoff, Kohlendioxid und Dämpfen höherer Kohlenwasserstoffe, in Kohle umgewandelt wird. Die Pyrolyseeinheit ist ein langes Rohr, durch das die Biomasse mittels einer Förderschnecke in die Oxidationseinheit transportiert wird. Das Rohr ist doppelwandig mit einem Außenmantel, und das aus der Reduktionseinheit abgezogene Produktgas wird durch den Außenmantel geleitet. Dadurch wird die für die Erhitzung der Biomasse in der Pyrolyseeinheit erforderliche Energie dem Produktgas entnommen. Anschließend werden diese Pyrolyseprodukte in einer Oxidationszone unter Zuführung eines Vergasungsmittels, z.B. Luft, Sauerstoff, mit Sauerstoff angereicherter Luft oder Wasserdampf, teilweise verbrannt, wobei die höheren (langkettigen) Kohlenwasserstoffe, die bei der Pyrolyse entstehen, gecrackt werden. Die Zuführung des Vergasungsmittels (Luft) erfolgt über Öffnungen oder Einlässe auf dem Umfang der Oxidationseinheit. An den Oxidationsvorgang schließt sich die Reduktion an, in der die Oxidationsprodukte mit dem Kohlenstoff der entgasten Biomasse reagieren und, soweit thermodynamisch möglich, in Kohlenmonoxid und Wasserstoff, umgewandelt werden.

Aus WO 2008/110383 ist ein Biomassevergaser mit einem mehrstufigen Aufbau bekannt, wobei die Pyrolyseeinheit im Wesentlichen ein senkrecht stehender Reaktor ist, durch den das Rohmaterial mittels einer senkrechten Steigschnecke gefördert wird. Die für die Pyrolyse benötigte Wärme von 200°C bis 700°C wird durch heiße Gase, die über eine Düse in die Pyrolyseeinheit geleitet werden, zugeführt. Über einen Auswurf gelangt das Material von der Pyrolyseeinheit in die Oxidationseinheit. In der Oxidationseinheit wird das Material unter Zugabe eines Vergasungsmittels bei Temperaturen im Bereich von 800°C bis 2000°C oxidiert. Die Oxidationseinheit ist dabei so konzipiert, dass sie als Transporteinheit für die Kohle aus der Pyrolyse dient. Aus der Oxidationseinheit gelangt das Material in eine sich trompetenförmig öffnende Reduktionseinheit. Die Reduktionseinheit ist dabei so ausgebildet, dass sich darin ein schwebendes Feststoffbett ausbildet. Am Gasausgang der Reduktionseinheit wird das Produktgas abgeführt, das anschließend gekühlt, gereinigt und auf beliebige Weise weiterverwertet werden kann. Die bei der Abkühlung gewonnene Energie kann in das System, z.B. zur Trocknung des zu vergasenden Materials, zurückgeführt werden.

Die DE 199 16 931 betrifft ein Luftzuführrohr für einen Vergaser zur Erzeugung von Brenngas. Durch das Luftzuführrohr wird das Vergasungsmittel zentral von oben direkt in die Oxidationszone geleitet. Der senkrecht stehende Reaktor wird dabei von seinem oberen Ende her mit Brennmaterial (Holz) beschickt. Die Pyrolysezone befindet sich dabei über der Oxidationszone und die Oxidationszone befindet sich über der Reduktionszone. Das Vergasungsverfahren läuft dabei von oben nach unten ab.

In der DE 10 2008 026 252 wird die Biomasse von unten zentral in einen Reaktor gefördert. Im Reaktor bildet sich eine Oxidationszone und eine darüberliegende Reduktionszone aus. Vergasungsmittels wird in den Reaktor über von dessen Unterseite vorstehende Düsen zugeführt.

Die DE 10 2010 018 197 betrifft einen Biomassevergaser in dem die Biomasse über eine Förderschnecke in den Vergasungsreaktor gefördert wird. In dem Reaktor bildet sich eine Oxidationszone und eine darüberliegende Reduktionszone aus. Im Bereich der Oxidationszone wird über Öffnungen in der Reaktorwand Vergasungsmittel in den Reaktor geführt.

Aus der DE 20 2008 006 737 und der AT 508 001 sind Biomassevergaser bekannt, in denen die zu vergasende Biomasse von oben in den Reaktor aufgegeben wird. Das Vergasungsmittel wird über Düsenrohre in einen inneren Bereich der Oxidationszone zugeführt.

Die WO 81/01010 betrifft einen Pyrolysereaktor für Kohlenstoff- und/oder Cellulosehaltiges Material. Das zu vergasende Material wird von unten über eine Förderschnecke in den Reaktor gefördert. Die Förderschnecke ist dabei hohl ausgeführt und ermöglicht es Vergasungsmittel in den Pyrolysereaktor zuzuführen. Das Kohlenstoff- oder Cellulosehaltige Material wird in dem Pyrolysereaktor durch einen Heizkolben oder eine Heizwendel erhitzt.

DE 69307572 T2 beschreibt einen Gleichstromgenerator mit einer wendelförmigen Schraube, die sich um eine vertikale Achse dreht.

Als Rohstoffe für die Biomassevergasung kommen vor allem Agrarrohstoffe, wie Holz, Getreide oder Maisstroh in Form von Hackgut oder gepresst als Pellets, trockene organische Abfälle aus Industrie und Haushalt, sowie Strauchschnitt oder Schnitt von Straßenbegleitgrün, aus der Landschaftspflege oder dem Gartenbau in Betracht. Die Qualität der Biomasse kann dabei schwanken, und es kann vorkommen, dass das Rohmaterial nicht verwertbare Störstoffe, wie Metalle, Minerale, Steine oder andere anorganische Stoffe enthält. Da diese Störstoffe nicht in Produktgas umgewandelt werden können, sich stattdessen im Vergasungsreaktor ansammeln und diesen letztlich verstopfen, wird das Rohmaterial üblicherweise zunächst aufwendig gereinigt, wobei der Großteil der Störstoffe aus dem Rohmaterial abgetrennt wird. Trotz dieser aufwendigen Reinigung des Rohmaterials gelangt dennoch ein Teil der Störstoffe in den Biomassevergaser.

Da in der Oxidationszone lokal Temperaturen von über 1000°C auftreten können, besteht die Gefahr, dass Verbrennungsrückstände zu schmelzen beginnen und sich Schlacke bildet. Beim Abkühlen erstarrt und versintert die Schlacke zu einer festen, gesteinsartigen Masse. Die Abkühlung und das Erstarren der Schlacke erfolgt beim Übergang aus der heißen Oxidationszone in kältere Randbereiche. Es bilden sich Anbackungen und Schlackeklumpen, die den Vergasungsreaktor verstopfen. Bei herkömmlichen Biomassevergasern müssen deswegen zusätzliche Reinigungsintervalle vorgesehen werden, um angefallene Schlacke aus dem Vergasungsreaktor zu entfernen.

Bei herkömmlichen Biomassevergasern sind daher häufige Wartungen notwendig, um Störstoffe und/oder Schlacke zu entfernen, die sich im Inneren des Vergasungsreaktors angesammelt haben. Dazu muss der Reaktor abgekühlt werden. Diese Arbeiten sind zeitaufwendig und mühsam. Aufgrund der Stillstandzeiten wird die Effizienz herkömmlicher Biomassevergaser stark beeinträchtigt.

### Aufgabe und Lösung der Erfindung

Aufgabe der vorliegenden Erfindung ist es daher, den Betrieb eines Biomassevergasers zu verbessern.

Diese Aufgabe wird durch das erfindungsgemäße Verfahren zur Gewinnung eines Produktgases durch Vergasen von Biomasse gelöst, wobei
die Biomasse als Rohmaterial über eine Zuführeinrichtung in einen Vergasungsreaktor gefördert wird, der eine Pyrolyseeinheit, eine Oxidationseinheit und eine Reduktionseinheit aufweist;
das Rohmaterial durch die Pyrolyseeinheit gefördert wird und dabei erhitzt wird, so dass es vollständig ausgegast und in die Pyrolyseprodukte umgewandelt wird;
die Pyrolyseprodukte unmittelbar in die Oxidationseinheit gefördert werden, in der sie unter Zuführung eines Vergasungsmittels verbrannt werden;
die Oxidationsprodukte unmittelbar in die Reduktionseinheit gelangen, in der sie in Produktgas umgewandelt werden; und
das Produktgas über eine Ableitung aus dem Vergasungsreaktor abgeführt wird.

Das Verfahren ist dadurch gekennzeichnet, dass das Vergasungsmittels im Zentrum der Oxidationseinheit zugeführt wird.

Vorzugsweise wird das Produktgas zumindest teilweise zur Erhitzung des Rohmaterials in der Pyrolyseeinheit eingesetzt wird.

Die Vorrichtung zur Durchführung des erfindungsgemäßen Verfahrens weist auf einen Vergasungsreaktor, der eine Pyrolyseeinheit, eine Oxidationseinheit und eine Reduktionseinheit, die unmittelbar ineinander übergehen, eine Einrichtung für die Zuführung der Biomasse in die Pyrolyseeinheit, eine Einrichtung zum Fördern der Biomasse durch die Pyrolyseeinheit, eine Einrichtung für die Zuführung eines Vergasungsmittels in die Oxidationseinheit und eine Ableitung zum Abführen des Produktgases aus der Reduktionseinheit des Vergasungsreaktors und ist dadurch gekennzeichnet, dass die Einrichtung für die Zuführung des Vergasungsmittels in die Oxidationseinheit etwa im Zentrum der Oxidationseinheit ausmündet, und die Einrichtung zum Fördern der Biomasse durch die Pyrolyseeinheit eine Förderschnecke mit einer Welle enthält, wobei die Welle hohl ist und dadurch als die Einrichtung für die Zuführung des Vergasungsmittels im Zentrum der Oxidationseinheit fungiert.

Die höchsten Temperaturen entstehen in der Oxidationseinheit in der Nähe der Stellen, an denen das Vergasungsmittel zugeführt wird, insbesondere, wenn dieses Luft ist. Beim Stand der Technik wird das Vergasungsmittel über Öffnungen oder Düsen auf dem Umfang der Oxidationseinheit zugeführt, und Anbackungen können sich daher auf der Innenseite des Reaktors um diese Stellen herum bilden. Dadurch, dass das Vergasungsmittel, z.B. Luftsauerstoff, bei der Erfindung im Zentrum der Oxidationszone zugeführt wird, fällt die Temperatur zu den Außenwänden hin etwas ab, wodurch Schlacke nicht an den Wänden anbacken kann.

Die Pyrolyseeinheit weist üblicherweise eine Fördereinrichtung für die pyrolysierende Biomasse auf, wobei die Fördereinrichtung eine Förderschnecke in einem Rohr ist und die Förderschnecke eine Welle und sich um diese windende Schneckengänge aufweist. Die Welle ist vorzugsweise hohl und bildet dadurch die Einrichtung für die Zuführung des Vergasungsmittels in die Oxidationseinheit. Durch die zentrale Zuführung des Vergasungsmittels in die Oxidationszone ergibt sich in Verbindung mit der Drehung der Förderschnecke eine Homogenisierung der Oxidationszone, wodurch die Ausbildung von Strömungskanälen innerhalb der Oxidationszone, die so genannte Strähnenbildung, vermieden wird. Dadurch wird zugleich die Temperatur vergleichmäßigt und entstehen nicht Stellen besonders hoher Temperatur, an denen dann die Schlackenbildung einsetzen würde. Durch das Wirbelbett, das durch das zentrale Einströmen des Vergasungsmittels beim Übergang von der Pyrolysezone in die Oxidations-/Reduktionszone erzeugt wird, wird eine Verdichtung des Rohmaterials und eine Schlackebildung durch Agglomeration in der Oxidations-/Reduktionszone vermieden werden.

Die Förderschnecke hat eine Welle, um die sich Schneckengänge winden. Die Welle ist hohl und fungiert dadurch als Einrichtung für die Zuführung des Vergasungsmittels in die Oxidationseinheit. An dem in die Oxidationszone ragenden Ende hat die Hohlwelle mehrere kleine seitliche und stirnseitige Öffnungen, um das Vergasungsmittel gleichmäßig in einem größeren Bereich der Oxidationszone zu verteilen.

### Bevorzugte Ausführungsformen des Biomassevergasers

Der Biomassevergaser umfasst ein Zuführsystem für das Rohmaterial (Biomasse), die Pyrolyseeinheit, die Oxidationseinheit, die Reduktionseinheit und die Ableitung für das Produktgas. Die Pyrolyseeinheit, die Oxidationseinheit und die Reduktionseinheit sind dabei direkt aneinander angrenzend in einem Vergasungsreaktor angeordnet. Vorzugsweise ist der Teil des Vergasungsreaktors, der die Oxidationseinheit und die Reduktionseinheit enthält, rotationssymmetrisch ausgeführt und senkrecht orientiert. Dieser Teil des Vergasungsreaktors kann aber auch geneigt unter einem beliebigen Winkel gegenüber der Horizontalen angeordnet sein.

Das Zuführsystem umfasst einen Vorlagebehälter, dem das Rohmaterial, z.B. Hackschnitzel, aufgegeben wird. Aus dem Vorlagebehälter gelangt das Rohmaterial unter Abdichtung gegenüber der Außenluft in die Pyrolyseeinheit.

Um eine vollständige Pyrolyse der Rohmaterialien in der Pyrolyseeinheit zu erreichen, muss eine ausreichende Verweilzeit des Rohmaterials bei einer ausreichend hohen Temperatur in der Pyrolyseeinheit gewährleistet werden. Die Verweilzeit hängt von der Länge und dem Querschnitt des Rohrs der Pyrolyseeinheit ab und ist über die Drehgeschwindigkeit der Förderschnecke steuerbar. Die benötigte Verweilzeit wird von der Art und Beschaffenheit des Rohmaterials bestimmt und beträgt bei handelsüblichen Hackschnitzeln etwa 20 Minuten.

Die für die Pyrolyse benötigte Wärmeenergie wird dem heißen Produktgas entnommen, das dazu aus der Reduktionseinheit abgezogen wird. Das Rohr oder das sonstige Gehäuse der Pyrolyseeinheit hat zweckmäßig einen doppelwandigen Außenmantel, und das Produktgas wird auf kürzestem Weg durch den Außenmantel der Pyrolyseeinheit geleitet. Typischerweise weist das Produktgas am Eingang des Außenmantels des Pyrolyserohrs eine Temperatur zwischen 700°C und 900°C, vorzugsweise etwa 800°C, auf, die zum Ausgang des Außenmantels auf unter 600°C, vorzugsweise etwa 400°C, abfällt. Die Pyrolyse des Rohmaterials kann dann bei einer Temperatur im Bereich von 550°C bis 800°C, vorzugsweise im Bereich von 650°C bis 750°C, stattfinden. Bei diesen Temperaturen wird das Rohmaterial in der Pyrolyseeinheit praktisch vollständig ausgegast und vollständig in eine Feststoffphase, bestehend aus Kohlenstoff, und eine Gas-/Dampfphase, bestehend aus Permanentgasen (CO, CO₂, H₂, CH₄) und kondensierbarem Wasserdampf und Kohlenwasserstoffdämpfen, aufgetrennt.

Durch diese vorteilhafte Konzeption wird ein Teil der Abwärme aus dem Vergasungsprozess über die Biomasse wieder in den Prozess zurückgeführt. Der Vorteil liegt dabei darin, dass durch diese Wärmerückführung weniger Produktgas teilverbrannt werden muss, um die für die Reduktionsreaktionen notwendigen Mindesttemperaturen im Bereich von 900 bis 950°C zu erreichen. Durch diese Rückführung ist es daher möglich, ein Produktgas mit besonders hohem Heizwert zu erzeugen. Durch die direkte Leitung des Produktgases aus der Reduktionseinheit in den doppelwandigen Außenmantel der Pyrolyseeinheit wird daher nur noch eine vergleichsweise geringe Wärmemenge benötigt, um die Biomasse in der Oxidations-/Reduktionszone auf die benötigte Temperatur von etwa 900 bis 1100°C zu erhitzen. Die dazu nötige Wärmeenergie wird durch die Oxidation eines geringen Teils der brennbaren Gase mittels Zuführung des Vergasungsmittels bereitgestellt. Die Verbrennung erfolgt dabei bei einem Lambda-Wert von λ < 0,5, vorzugsweise bei einem Lambda-Wert von λ = 0,1 bis 0,3 und noch vorzugsweise bei einem Lambda-Wert von λ = 0,15 bis 0,25, bevorzugt bei einem Lambda-Wert von λ = 0,2. Ein Lambdawert von unter λ = 0,2 kann unter anderem durch Vorwärmung des Vergasungsmittels, z.B. Luft, unter Ausnutzung der Restwärme des Produktgases erzielt werden. Diese Wärmerückführung hat den Vorteil, dass ein geringerer Teil der brennbaren Gase zum Erreichen der notwendigen Reaktionstemperaturen verbrannt werden muss und so ein größerer Anteil des Produktgases erhalten bleibt und das produzierte Produktgas daher einen höheren Heizwert aufweist.

Die Wärmerückführung erhöht zudem den Kaltgaswirkungsgrad (KGW) des Produktgases. Der KGW ist der Quotient aus dem chemisch gebundenen Energieinhalt des Produktgases und der mit der Biomasse zugeführten Energie in Form von Heizwert der Biomasse mal Massenstrom.

Anstatt die gesamte Biomasse über eine einzige Förderschnecke zu fördern, können auch mehrere Förderschnecken parallel betrieben werden. Die mehreren Förderschnecken können zum Beispiel sternförmig um die Oxidationseinheit angeordnet sein und fördern jeweils Biomasse in die Oxidationseinheit. Der Einsatz mehrerer Förderschnecken ist insbesondere dann sinnvoll, wenn aufgrund der benötigten Menge des Rohmaterials dessen vollständige Pyrolyse innerhalb einer einzigen Förderschnecke nicht mehr gewährleistet werden kann. Für die Zuführung des Vergasungsmittels kann die Welle einer oder mehrerer Förderschnecken hohl sein.

In einer besonders bevorzugten Ausführungsform setzt sich die Fördereinrichtung der Pyrolyseeinheit aus zwei Fördereinheiten zusammen, die hintereinander angeordnet sind, wobei jede Fördereinheit jeweils eine eigene Förderschnecke aufweist. Die erste Fördereinheit nimmt dabei die Biomasse aus dem Vorlagebehälter auf und gibt sie der zweiten Fördereinheit auf, die sie dann in die Oxidationseinheit fördert. Die Förderschnecke der ersten Fördereinheit dreht sich in einem doppelwandigen Rohr, wobei das Produktgas, wie oben beschrieben, durch den Außenmantel geleitet wird, um die Biomasse für die Pyrolyse zu erwärmen. Die Welle der Förderschnecke der ersten Fördereinheit ist nicht hohl. Die erste Fördereinheit kann beliebig ausgerichtet sein. Im Allgemeinen ist sie leicht ansteigend horizontal ausgerichtet.

Die zweite Fördereinheit ist zweckmäßig vertikal ausgerichtet und wesentlich kürzer als die erste Fördereinheit. Die erste Fördereinheit mündet in die zweite Fördereinheit, die die pyrolysierte Biomasse dann nach oben in die Oxidationseinheit drückt. Die zweite Fördereinheit ist möglichst kurz und braucht daher nicht doppelwandig zu sein. Die Welle der Förderschnecke der zweiten Fördereinheit ist hohl, und durch sie wird das Vergasungsmittel in die Oxidationseinheit geleitet.

Zur stofflichen Entkopplung kann die Wärmeenergie des Produktgases auch über einen Wärmetauscher an die Pyrolyseeinheit übertragen werden.

Von der Oxidationseinheit gelangt die Biomasse durch das von unten nachschiebende Material direkt in die Reduktionseinheit. Vorzugsweise erweitert sich die Reduktionseinheit nach oben konisch und bildet sich in ihr ein Wirbelbett aus. Durch das zugeführte Vergasungsmittel (Luft), sowie durch die Verbrennungsgase entsteht eine starke Strömung, die, je nach Strömungsgeschwindigkeit, in der konischen Reduktionseinheit zu einem stationären Wirbelbett oder zu einem reinen Wirbelbett führt. Durch die Aufweitung des Querschnitts im oberen Bereich der Reduktionseinheit wird die Geschwindigkeit der Gase dabei soweit reduziert, dass nur wenig Holzkohle aus dem System ausgetragen wird. Leichtere Aschepartikel strömen dagegen mit dem Produktgas ab und können z.B. über einen Staubabscheider im weiteren Verfahrensablauf abgeschieden werden. Durch den konischen Querschnitt passt sich das System selbständig an unterschiedliche Leistungen (=Gasgeschwindigkeiten) an. Die Aufweitung des Durchmessers der Reduktionseinheit muss so gewählt werden, dass nur die Aschepartikel, aber keine Holzkohle, durch den Luftstrom ausgetragen werden. Je nach Dimensionierung der Anlage kann sich der Durchmesser der Reduktionseinheit von unten nach oben auf das Zwei- bis Sechsfache, vorzugsweise um etwa das Vierfache, aufweiten.

Das Wirbelbett enthält Kohlenstoff aus der Pyrolyse, Pyrolysegase und Vergasungsmittel und wird durch die Vergasungsmittelzufuhr in die Oxidationszone gebildet. In dem Wirbelbett bewegen sich die Kohlestücke relativ zueinander, wodurch es zu einer zusätzlichen abrasiven Zerkleinerung der Feststoffpartikel kommt. Dadurch wird die Oberfläche der Feststoffpartikel weiter erhöht, so dass die Redoxprozesse weiter beschleunigt werden.

Das von dem Biomassevergaser erzeugte Produktgas wird anschließend über eine Ableitung aus dem Vergasungsreaktor herausgeführt.

Durch die vollständige Ausgasung des Rohmaterials in der Pyrolysezone ist sichergestellt, dass alle langkettigen Moleküle beim Übergang in die heiße Oxidationszone bereits in gas- oder dampfförmigem Zustand vorliegen und dann in der Oxidationszone aufgespaltet (gecrackt) werden können. Dies ist ein entscheidender Vorteil gegenüber konventionellen Vergasungsanlagen, in denen ein erheblicher Anteil langkettiger Kohlenwasserstoffe oft erst im Bereich der Oxidationszone oder sogar erst im Bereich der Reduktionszone freigesetzt wird, wo sie dann aufgrund der kürzeren Verweilzeiten oder aufgrund der dort herrschenden niedrigeren Temperaturen nicht mehr vollständig umgewandelt werden können.

Dadurch, dass bereits vor der Oxidationszone eine vollständige Ausgasung des Rohmaterials erfolgt, sind zum Cracken der langkettigen Kohlenwasserstoffe nur noch Gasphasenreaktionen erforderlich. Diese Gasphasenreaktionen werden zudem katalytisch durch den bei der Pyrolyse entstandenen Kohlenstoff unterstützt.

Vorzugsweise ist die Produktgasableitung mit einer Bypassleitung versehen, über die ein Teil des heißen Produktgases direkt, also ohne vorherige Wärmeabgabe an die Pyrolyseeinheit, an den Produktgasausgang gefördert werden kann. Die Bypassleitung ermöglicht es, die Wärmemenge, die an die Pyrolyseeinheit abgegeben werden soll, zur Temperatursteuerung exakt zu wählen.

Die Bypassleitung bietet den weiteren Vorteil, dass der Biomassevergaser schneller heruntergefahren werden kann, da die Wärmezufuhr in die Pyrolyseeinheit kontrolliert gesteuert werden kann.

### Austrag der Störstoffe

Vorzugsweise ist eine Austrageinrichtung vorgesehen, über die Störstoffe und Schlacke einfach oder sogar im laufenden Betrieb aus dem Vergasungsreaktor ausgetragen werden können.

Die Austrageinrichtung weist einen Sammelbereich auf, in dem sich Störstoffe und Schlacke durch Schwerkraft ansammeln können. Eine Fördereinrichtung, z.B. ein weiterer Schneckenförderer, kann vorgesehen sein, um die Störstoffe aus dem Sammelbereich herauszufördern.

Bei Biomassevergasern mit im Wesentlichen vertikal ausgerichteten axialsymmetrischen Oxidations- und Reduktionszonen und einer schräg von unten in die Oxidationseinheit eintretenden Pyrolyseeinheit kann die Austrageinrichtung eine von der Oxidationseinheit ausgehenden axialen rohrförmigen Verlängerung des Reaktors nach unten sein. Die Pyrolyseeinheit tritt dabei mit einer Neigung von 20° bis 75°, vorzugsweise 45°, gegenüber der Horizontalen in die Oxidationseinheit ein. Am unteren Ende der Verlängerung befindet sich der Sammelbereich.

Dies ergibt den technischen Vorteil, dass Störstoffe, die in die Oxidationszone eingetragen werden oder Schlacke, die in der Oxidationszone gebildet wird, aufgrund der Schwerkraft vertikal nach unten aus dem Vergasungsreaktor absinken und herausfallen können.

Die rohrförmige Verlängerung der Austrageinrichtung zeigt vorzugsweise vertikal nach unten und hat eine Querschnittsfläche, die im Wesentlichen der Querschnittsfläche der Oxidationseinheit entspricht. Die rohrförmige Verlängerung kann aber auch geneigt angeordnet sein. Sie kann z.B. entgegengesetzt zur Pyrolyseeinheit geneigt sein und mit dieser unmittelbar unterhalb der Oxidationszone zusammentreffen.

Im Sammelbereich sammelt sich typischerweise neben den Störstoffen und der Schlacke auch noch brennbares Restmaterial an. Vorzugsweise weist die rohrförmige Verlängerung daher Düsen zum Eintrag von Vergasungsmittel auf. Durch die Zuführung von Vergasungsmittel kann das brennbare Restmaterial verbrannt werden, wodurch ein zusätzlicher Wärmeeintrag in die Oxidationszone ermöglicht wird. Am unteren Ende der rohrförmigen Verlängerung fallen dann nur noch nicht brennbare Störstoffe und Schlacke in den Sammelbereich, die über eine Austrageinrichtung aus dem Biomassevergaser ausgetragen werden.

Diese Austrageinrichtung kann im laufenden Betrieb Störstoffe und Schlacke austragen.

Bei der Ausführungsform, bei der die Fördereinrichtung der Pyrolyseeinheit in zwei Fördereinheiten unterteilt ist, kann die zweite Fördereinheit zugleich als Austrageinrichtung ausgebildet sein. Die Förderschnecke hat dazu einen Abstand von einigen Zentimetern, zum Beispiel 2 cm, von der Innenwand des Rohrs, in dem sie sich dreht. Störstoffe, zum Beispiel Steine oder Metallteile, in der Größenordnung dieses Abstands können dadurch entlang der Innenwand des Rohrs aufgrund ihres höheren spezifischen Gewichts als die Biomasse nach unten rutschen. Größere Störstoffe können sich auch beim Eintritt der ersten Fördereinheit in die zweite Fördereinheit aus der sich ständig in Bewegung befindenden Biomasse nach unten absondern und dann entlang den unteren im Wesentlichen von Biomasse freien Schneckengängen der zweiten Förderschnecke herausfallen. Unmittelbar unterhalb der Förderschnecke befindet sich zweckmäßig ein Sammelbehälter für die Störstoffe. In der Oberseite des Sammelbehälters ist eine kreisförmige Öffnung vorgesehen, in der sich das untere Ende der Förderschnecke mit dem erwähnten Abstand von einigen Zentimetern dreht.

Durch diese Kombination von zweiter Fördereinheit und Austrageinrichtung werden die in Abständen erforderliche Reinigung des Biomassevergasers und der ebenfalls in Abständen notwendige Austrag der Asche erleichtert. Es genügt dazu, die erste Fördereinheit der Pyrolyseeinheit anzuhalten und die Oxidationseinheit und die Reduktionseinheit leer zu brennen und dann die Förderschnecke der zweiten Fördereinheit rückwärts laufen zu lassen. Die nicht verbrannten Reste, Asche und eventuell vorhandene Störstoffe werden dann nach unten in den Sammelbehälter ausgetragen. Es ist dazu nicht notwendig, den Biomassevergaser abzukühlen. Der Austrag erfolgt sehr rasch, und der Biomassevergaser kann dann nach einer kurzen Heizphase wieder seinen normalen Betrieb aufnehmen.

Durch die Austrageinrichtung verlängern sich die Wartungsintervalle und werden die Stillstandszeiten reduziert. Die Betriebszeiten werden dadurch erhöht, so dass die Anlage effizienter betrieben werden kann.

Ein weiterer Vorteil der vorliegenden Erfindung ist, dass das Rohmaterial nicht aufwendig gereinigt werden muss. Störstoffe können durch die Austrageinrichtung im laufenden Betrieb oder innerhalb einer sehr kurzen Betriebsunterbrechung aus dem Vergasungsreaktor ausgetragen werden. Das Rohmaterial muss keine strengen Reinheitskriterien erfüllen. So ist es auch möglich, Rohmaterial, das relativ viele Störstoffe enthält und deshalb für herkömmliche Biomassevergaser ungeeignet ist, einem Biomassevergaser mit einer Austrageinrichtung aufzugeben.

### Steuerung des Biomassevergasers

Die Steuerung der Leistung des Biomassevergasers kann analog zu dem in der WO 2011/134961 beschriebenen Verfahren erfolgen. Über die Absaugeinrichtung wird dabei eingestellt, welche Menge an Produktgas produziert werden soll. Die Produktionsleistung ist dabei frei einstellbar und kann zwischen 30 und 120% der nominellen Leistung des Biomassevergasers betragen.

Hochwertiges Produktgas hat eine Zusammensetzung von etwa 22% CO, 20% H₂, 10% CO₂, etwa 3% Methan, 10% Wasserdampf; der Rest besteht aus N₂. Um diese Zusammensetzung des Produktgases zu erreichen, kann der Biomassevergaser auf verschiedene Weise gesteuert werden:
Da der Methangehalt und der Kohlendioxidgehalt des Produktgases Parameter sind, die sehr schnell auf Veränderungen der Betriebsbedingungen reagieren, eignen sie sich als Regelgröße für die Biomassevergasung. Bei der vorgegebenen Saugleistung wird die Zufuhr der Biomasse dann derart geregelt, dass sich ein Methangehalt von etwa 3% im Produktgas oder ein CO₂-Gehalt von etwa 11% einstellt. Ist der Methangehalt (oder CO₂-Gehalt) des Produktgases zu hoch, so befindet sich zu viel Rohmaterial in der Oxidations-/Reduktionszone und ist die Temperatur in der Oxidationszone zu niedrig. In diesem Fall wird die Biomassezufuhr gedrosselt. Ist der Methangehalt (oder CO₂-Gehalt) des Produktgases zu niedrig, so befindet sich zu wenig Rohmaterial in der Oxidations-/Reduktionszone und ist die Temperatur in der Oxidationszone zu hoch. In diesem Fall wird die Biomassezufuhr in die Oxidationszone erhöht. Durch die Regelung der Biomassevergasung auf den Methangehalt oder den Kohlendioxidgehalt des Produktgases wird eine gleichmäßige Gaszusammensetzung erreicht, wodurch wiederum ein kontinuierlicher Betrieb des Biomassevergasers gewährleistet ist. Statt auf den Methangehalt kann auch auf andere Bestandteile, z.B. auf H₂ oder CO, des Produktgases geregelt werden.

Die Zufuhrmenge an Biomasse wird mittels der Drehzahl der Förderschnecke der Pyrolyseeinheit eingestellt. Ist die Biomasse-Menge dabei zu groß, das heißt größer als sie im Prozess zu Kohlenstoff und dann im Reduktionsbereich zum Produktgas umgewandelt werden kann, kommt es zu einer Überfüllung und Verstopfung des Reduktionsbereiches. Ist die zugeführte Menge zu gering, nimmt der Kohlenstoffgehalt in der Reduktionszone immer mehr ab, bis die Reduktionszone komplett verschwindet und nur noch eine Oxidationszone vorhanden ist. Es kommt zu einem Durchbrand. Dabei wird kein Produktgas mehr erzeugt, sondern ein Stickstoff-Kohlendioxid-Gemisch mit im Vergleich zum Produktgas deutlich geringeren Wasserstoff- und Kohlenmonoxidanteilen, ähnlich wie bei einer unvollständigen Verbrennung. Dementsprechend wird die Zufuhr von Biomasse erhöht, wenn der Methan- oder Kohlendioxidgehalt zu niedrig ist, und umgekehrt.

Als Vergasungsmittel kann z. B. Luft, Sauerstoff, mit Sauerstoff angereicherte Luft oder Wasserdampf eingesetzt werden.

Die Zufuhr des Vergasungsmittels wird dabei nicht aktiv gesteuert. Die Menge an zugeführtem Vergasungsmittel ergibt sich aus dem durch die Absaugeinrichtung erzeugten Unterdruck in der Oxidations-/Reduktionszone und dem Öffnungsquerschnitt der hohlen Welle der Pyrolyseeinheit oder der sonstigen Zufuhreinrichtung des Vergasungsmittels in Verbindung mit der entsprechend geregelten Zufuhr an zu vergasender Biomasse. Das Volumen des zugeführten Vergasungsmittels beträgt dabei etwas weniger als die Hälfte des abgezogenen Produktgases. Entsprechend der Menge des Vergasungsmittels und des entstehenden Produktgases ist eine bestimmte Menge an Biomasse erforderlich.

Nach einem anderen Verfahren, das hier bevorzugt wird, erfolgt die Steuerung des Vergasungsreaktors in Abhängigkeit von der Temperatur in der Oxidationseinheit. Die optimale Temperatur innerhalb der Oxidationszone beträgt etwa 1000°C. Gemessen werden kann die Temperatur nur an der Wand der Oxidationseinheit. Wenn im Inneren der Oxidationszone eine Temperatur von etwa 1000°C herrscht, so beträgt die Wandtemperatur etwa 950 bis 980°C. Wenn die Temperatur zu hoch ist, so wird die Drehzahl der Förderschnecke der Pyrolyseeinheit erhöht. Durch die Erhöhung der Zufuhr an Biomasse wird die Temperatur reduziert. Umgekehrt wird die Drehzahl verringert, wenn die Temperatur unter den gewünschten Wert fällt. Die Zufuhr des Vergasungsmittels wird auch bei diesem Verfahren nicht aktiv gesteuert. Sie ergibt sich aus dem Unterdruck, der durch den Abzug des Produktgases entsteht.

Auch hierbei wird die Zufuhr des Vergasungsmittels nicht aktiv gesteuert und ergibt sich die Menge an zugeführtem Vergasungsmittel aus dem durch die Absaugeinrichtung erzeugten Unterdruck in der Oxidations-/Reduktionszone und dem Öffnungsquerschnitt der hohlen Welle der Pyrolyseeinheit oder der sonstigen Zufuhreinrichtung des Vergasungsmittels. Das Volumen des zugeführten Vergasungsmittels beträgt dabei etwas weniger als die Hälfte des abgezogenen Produktgases.

Der Biomassevergaser weist demgemäß vorzugsweise eine Steuerung auf, die die Temperatur in der Oxidationseinheit erfasst und die Förderleistung der Einrichtung zur Förderung der Biomasse durch die Pyrolyseeinheit erhöht, wenn die erfasste Temperatur über der Soll-Temperatur liegt, und umgekehrt Förderleistung erniedrigt, wenn die erfasste Temperatur unter der Soll-Temperatur liegt. Die Soll-Temperatur beträgt vorzugsweise etwa 1000°C.

Die Temperatur in der Oxidations-/Reduktionszone wird ferner überwacht, um das Material der Komponenten des Vergasungsreaktors zu schonen. Dazu wird die Temperatur in der Oxidations-/Reduktionszone begrenzt. Zum Beispiel kann ein Begrenzungssystem vorgesehen sein, das den Biomassevergaser herunterfährt, wenn die Temperatur in der Oxidations-/Reduktionszone einen gewissen vorgegebenen Grenzwert überschreitet.

Die Regelung kann mit einer üblichen Regelelektronik bewerkstelligt werden, deren Regelgröße der Messwert des Methangehalts des Produktgases darstellt. Da zur Prozesskontrolle und Beurteilung der Prozessgasqualität ohnehin eine Methangasmessung erforderlich ist, stellt die Verwendung des Messwerts des Methangehalts als Regelgröße für die Prozessregelung eine besonders effiziente Form der Prozessregelung in der Biomassevergasung dar.

Vorzugsweise befindet sich knapp über der Oxidationszone eine Öffnung, mit deren Hilfe der Biomassevergaser beim Anfahren angezündet werden kann. Dabei wird durch diese Öffnung nicht nur der Anzündvorgang, z. B. durch einen Kohleanzünder, ein Heißluftgebläse, einen Gasanzünder oder ähnliches, realisiert, sondern durch diese Öffnung zieht auch so viel Luft, dass es beim Anzündvorgang zu einer schadstoffarmen Verbrennung der Biomasse kommt. Im Gegensatz zu anderen Verfahren kann das System somit durch eine geruchs- und schadstoffarme Verbrennung der Biomasse beim Anfahren aufgeheizt werden.

Das Rohmaterial können Holzhackschnitzel oder eine beliebige andere zerkleinerte, trockene Biomasse sein, z. B. Strauchschnitt oder Restholz. Die Restfeuchte der Biomasse soll möglichst gering sein und unter 20% betragen. Optimal ist eine Restfeuchte der Biomasse von 7%. Eine weitere Reduzierung ist nicht ökonomisch, da die dafür notwendige Energie höher ist als der Energiegewinn durch Besserung der Qualität des Produktgases.

Ein durch die Erfindung erzielbarer genereller Vorteil besteht darin, dass die Leistung des Biomassevergasers bei gleichbleibender Gasqualität einstellbar ist. Dies bedeutet, dass die Menge des produzierten Produktgases gezielt einstellbar ist, und dabei, unabhängig vom Produktgasumsatz, immer eine gleichbleibende Qualität und Zusammensetzung des Produktgases gewährleistet ist. Das gewonnene Produktgas ist hinsichtlich seiner Gasqualität uneingeschränkt zum Antrieb eines Gasmotors oder einer Gasturbine einsetzbar, die zum Beispiel einen Generator treiben. Es ist sogar in Brennstoffzellen nutzbar.

Ausführungsbeispiele der Erfindung werden nachfolgend anhand der Zeichnung erläutert. Es zeigen:
- Fig. 1: ein erstes Ausführungsbeispiel eines erfindungsgemäßen Biomassevergasers mit einer einteiligen Fördereinrichtung der Pyrolyseeinheit;
- Fig. 2: ein zweites Ausführungsbeispiel eines erfindungsgemäßen Biomassevergasers mit einer zweiteiligen Fördereinrichtung der Pyrolyseeinheit; und
- Fig. 3 bis 6: Details eines dritten Ausführungsbeispiels, das dem zweiten ähnlich ist und zusätzlich eine Austrageinrichtung für Störstoffe besitzt.

Die Biomassevergaser der Ausführungsbeispiele dienen der Umwandlung von Biomasse-Rohmaterial in Produktgas (Wasserstoff, Kohlenmonoxid). Die Biomassevergaser bestehen jeweils im Wesentlichen aus einem Zuführsystem 10 für Biomasse in Form von Holzhackschnitzeln 12, einer Pyrolyseeinheit 14, einer Oxidationseinheit 16, einer unmittelbar über der Oxidationseinheit 16 angeordneten Reduktionseinheit 18, wobei die Pyrolyseeinheit 14 eine Fördereinrichtung aufweist, die die pyrolysierende Biomasse von dem Zuführsystem 10 zur Oxidationseinheit 16 fördert, einer Ableitung 20 für Produktgas 22, die das Produktgas 22 zur Erwärmung der Biomasse zur Pyrolyseeinheit 14 leitet, und einer Austrageinrichtung 50 für Störstoffe und Schlacke 52. mit einem Vergasungsreaktor (32), Die Pyrolyseeinheit (14), die Oxidationseinheit (16) und die Reduktionseinheit (18) folgen unmittelbar aufeinander, gehen ineinander über und bilden einen Vergasungsreaktor 32.

Das Zuführsystem 10 besteht aus einem Vorlagebehälter 24, dem die Holzhackschnitzel 12, Pellets oder ähnliches aufgegeben werden. Über ein Schleusensystem 26, das eine Abdichtung gegenüber der Außenluft sicherstellt, werden die Holzhackschnitzel 12 der Fördereinrichtung der Pyrolyseeinheit 14 aufgegeben. Die Pyrolyseeinheit 14 beinhaltet als Fördereinrichtung eine Förderschnecke 28 in einem Rohr 38.

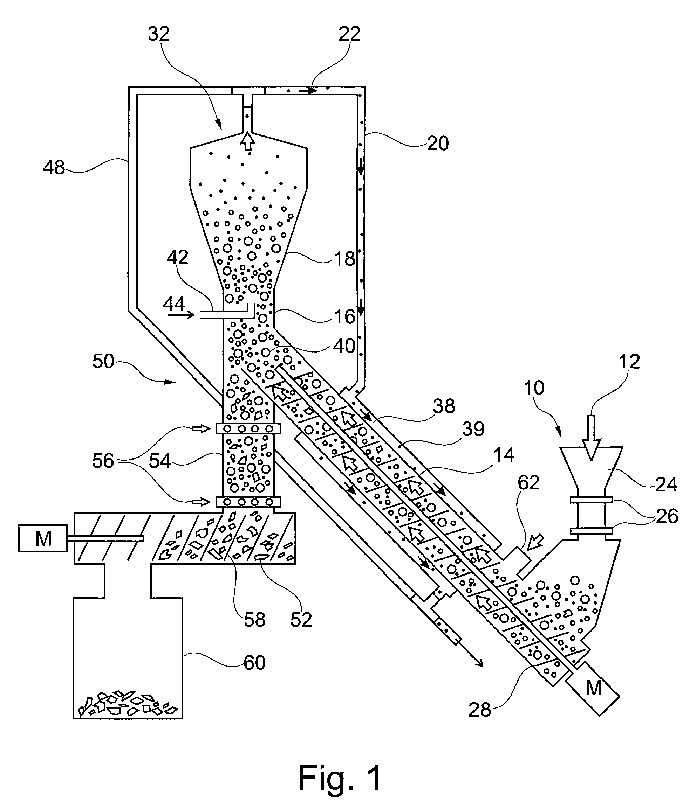

Bei dem ersten Ausführungsbeispiel (Fig. 1) ist die Pyrolyseeinheit 14 einteilig. Die Förderschnecke 28 ist gegenüber der Horizontalen um 45° geneigt angeordnet und fördert das Rohmaterial 12 durch die Pyrolyseeinheit 14 zur Oxidationseinheit 16. Das Rohr 38 der Pyrolyseeinheit 14 ist doppelwandig mit einem ringförmigen Hohlmantel 39 ausgeführt. Das heiße Produktgas 22 wird im Gegenstrom zum Biomasse-Rohmaterial durch den Hohlmantel 39 der Pyrolyseeinheit 14 geleitet, um die Wärmeenergie des Produktgases 22 für die vollständige Pyrolyse der Holzhackschnitzel 12 zu nutzen. Am oberen Ende der Förderschnecke 28 wird das pyrolysierte Rohmaterial bei einem Übergang 40 in die Oxidationseinheit 16 gefördert, die sich unmittelbar an die Pyrolyseeinheit 14 anschließt.

Beim Übergang 40 in die Oxidationseinheit 16 ist das Rohmaterial bereits vollständig ausgegast und liegt in zwei Phasen, einer Feststoffphase und einer Gas/Dampfphase, vor. Die Feststoffphase besteht aus ausgegaster Holzkohle. Die Gas/Dampfphase besteht aus den verschiedenen Pyrolysegasen Kohlenmonoxid, Kohlendioxid und Wasserstoff, sowie aus langkettigeren Kohlenwasserstoffen.

Auf Höhe der Oxidationseinheit 16 wird über eine von der Reaktorwand schräg nach oben ins Zentrum der Oxidationszone verlaufende Leitung 42 Umgebungsluft 44 als Vergasungsmittel zugeführt. Die Luftzufuhr erfolgt dadurch, dass das Produktgas 22 über einen Motor oder einen Saugzug (Gebläse) (nicht gezeigt) abgesaugt wird. Dieses Absaugen führt zu einem Unterdruck im Bereich der Reduktions- 18 und der Oxidationseinheit 16 des Vergasungsreaktors 32, wodurch die Umgebungsluft 44 in die Oxidationseinheit 16 gesaugt wird. Am Ende der Leitung 42 befinden sich mehrere Öffnungen, über die die Umgebungsluft 44 in verschiedene Richtungen verteilt wird.

Die Reduktionseinheit 18 schließt sich direkt oberhalb an die Oxidationseinheit 16 an. In der Reduktionseinheit 18 erweitert sich der Querschnitt des Vergasungsreaktors 32 nach oben hin konisch unter einem Winkel von etwa 10° auf etwa den 2,5-fachen Durchmesser. Durch die zugeführte Luft 44 und die Verbrennungsgase entsteht eine starke Strömung, so dass sich in der konisch ausgeführten Reduktionseinheit 18 ein Wirbelbett entwickelt. Durch die Aufweitung des Querschnitts im oberen Bereich der Reduktionseinheit 18 wird die Geschwindigkeit der Gase soweit reduziert, dass nur noch wenig Holzkohle aus dem System ausgetragen wird. Leichtere Aschepartikel strömen dagegen mit dem Produktgas 22 ab und werden in einem Staubabscheider (nicht gezeigt) im weiteren Verfahrensablauf abgeschieden. Der abgeschiedene Staub wird an einer Stelle 62 unmittelbar nach der Zuführeinrichtung 10 der Förderschnecke 28 aufgegeben.

Am oberen Ende der Reduktionseinheit 18 wird das Produktgas 22 über eine Leitung 20 aus dem Vergasungsreaktor 32 abgeführt. Dabei wird das Produktgas 22 zunächst durch den doppelwandigen Mantel 38 der Pyrolyseeinheit 14 geleitet, um die nötige Wärmeenergie für die vollständige Pyrolyse bereitzustellen. Die Produktgasleitung 20 ist mit einer Bypassleitung 48 versehen, über die ein steuerbarer Teil des heißen Produktgases 22 direkt, also ohne zuvor durch die doppelwandig ausgeführte Reaktorwand 38 der Pyrolyseeinheit 14 geführt zu werden, an den Produktgasausgang geführt werden kann. Dadurch ist es möglich, die Wärmemenge, die an die Pyrolyseeinheit 14 abgegeben werden soll, exakt zu steuern.

Unterhalb des Übergangs 40 von Pyrolyseeinheit 14 in die Oxidationseinheit 16 befindet sich die Austrageinrichtung 50 für Störstoffe und Schlacke 52. Die Austrageinrichtung 50 umfasst einen Sammelbereich 54, der sich direkt unterhalb der Oxidationseinheit 16 befindet. Störstoffe 52, die sich im Rohmaterial 12 befinden und durch die Förderschnecke 28 in den Vergasungsreaktor 32 gefördert werden, wie Metalle oder Minerale, sammeln sich aufgrund der Schwerkraft am unteren Bereich der Oxidationszone 16 an und sinken in den Sammelbereich 54 ab. Auch Schlacke 52, die bei der Verbrennung der Pyrolyseprodukte in der Oxidationseinheit 16 entsteht, kann entgegen dem Rohmaterialstrom durch die Oxidationseinheit 16 in den Sammelbereich 54 absinken. Neben den Störstoffen gelangt auch brennbares Rohmaterial in den Sammelbereich 54. Um die Wärmeenergie dieses Rohmaterials auszunutzen, sind Vergaserdüsen 56 vorgesehen, über die Vergasungsmittel (Luft, Sauerstoff) in den Trennbereich 54 eingeleitet wird. Die bei der Verbrennung des Rohmaterials im Trennbereich 54 freiwerdende Wärmemenge unterstützt dabei zusätzlich die in der Oxidationszone ablaufenden chemischen Prozesse.

Am unteren Ende der Austrageinrichtung 50 sammeln sich dann ausschließlich nicht brennbare Störstoffe und Schlacke 52 im Sammelbereich 54 an. Diese Stoffe werden über eine motorgetriebene Förderschnecke 58 aus dem Biomassevergaser in einen Auffangcontainer 60 gefördert.

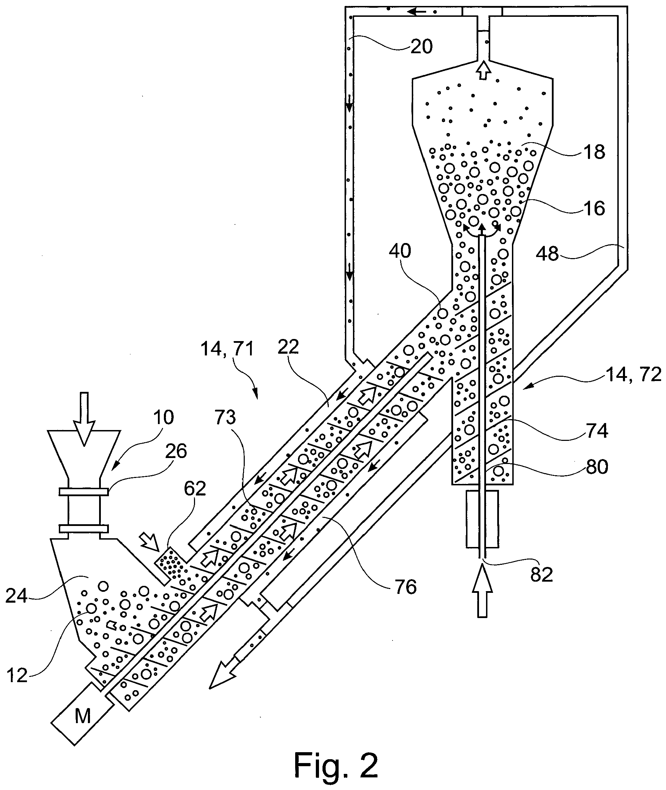

Beim zweiten Ausführungsbeispiel (Fig. 2) besteht die Fördereinrichtung der Pyrolyseeinheit 14 aus einer ersten Einheit 71 und einer zweiten Einheit 72 mit jeweils einer eigenen Förderschnecke 73 bzw. 74 in einem Rohr. Die erste Förderschnecke 73 hat einen möglichst geringen Abstand von der Innenseite des Rohrs, ist unter einem Winkel von etwa 45° zur Horizontalen angeordnet und fördert die Biomasse von der Zuführeinrichtung 10 in die zweite Einheit 72, die im Wesentlichen vertikal angeordnet ist und die Biomasse weiter nach oben in die Oxidationseinheit 16 fördert. Die erste Einheit 71 ist relativ lang und ihr Rohr ist über den größten Teil seiner Länge doppelwandig mit einem Ringraum oder ringförmigen Hohlmantel 76 ausgebildet. Durch den Ringraum 76 wird das aus der Reduktionseinheit 18 abgeführte Produktgas 22 im Gegenstrom zu der Transportrichtung der ersten Förderschnecke 73 hindurchgeleitet. Der Ringraum 76 besitzt eine Innenwendel 78, so dass das Produktgas 22 in dem Ringraum 76 auf einem wendelförmigen Weg geleitet wird und dabei die Biomasse auf 650 bis 700°C erwärmt. Diese Temperatur bewirkt eine praktisch vollständige Pyrolyse der Biomasse. Die Länge der ersten Einheit 71 und die Fördergeschwindigkeit der ersten Förderschnecke 73 sind dabei so aufeinander abgestimmt, dass die Biomasse etwa 20 Minuten in der ersten Einheit 71 der Pyrolyseeinheit 14 verweilt.

Die zweite Einheit 72 ist vertikal angeordnet und wesentlich kürzer als die erste Einheit 71. Sie fördert die im Wesentlichen vollständig pyrolysierte Biomasse nach oben in die Oxidationseinheit 16. Die beiden Förderschnecken 73, 74 bestehen wie üblich aus einer zentralen Welle, auf der die Schneckengänge angeordnet sind. Die Welle 80 der zweiten Förderschnecke 74 ist hohl und bildet einen Kanal 82, durch den das Vergasungsmittel vertikal nach oben ins Zentrum der Oxidationseinheit 16 geleitet wird.

Im Übrigen entspricht das zweite Ausführungsbeispiel dem ersten.

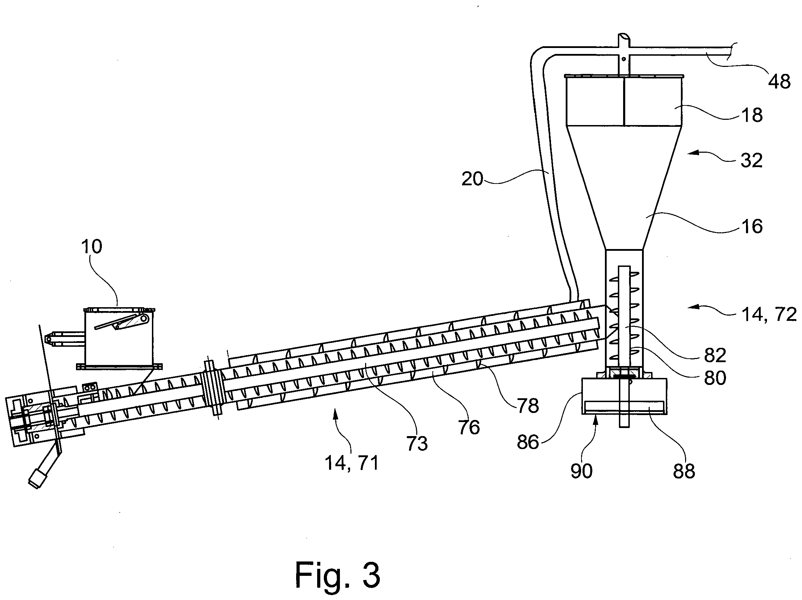

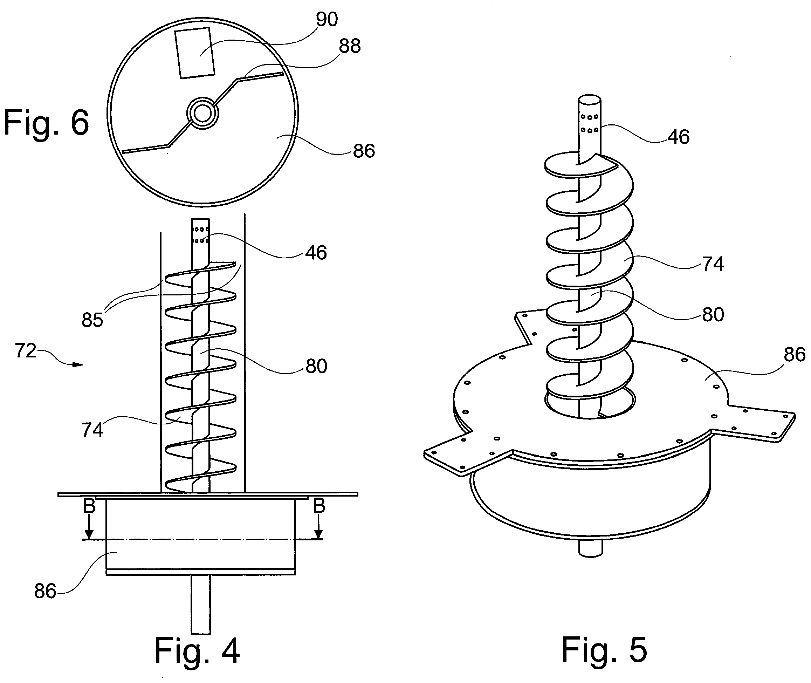

Bei dem dritten Ausführungsbeispiel (Figuren 3 bis 6) besteht die Fördereinrichtung der Pyrolyseeinheit 14 ebenfalls aus einer ersten Einheit 71 und einer zweiten Einheit 72 mit jeweils einer eigenen Förderschnecke 73 bzw. 74 in einem Rohr. Die erste Einheit ist mit einer geringen Neigung gegenüber der Horizontalen angeordnet (Fig. 3). Die zweite Einheit 72 ist wiederum vertikal angeordnet und dient hier zugleich dem Austrag von Störstoffen, zum Beispiel Steinen oder kleinen Metallteilen. Zwischen dem Umfang der zweiten Förderschnecke 74 und der Innenseite des Rohrs der zweiten Einheit 72 besteht dazu ein Abstand von etwa 2 cm (Fig. 4). Dadurch können Störstoffe, die kleiner als 2 cm sind, nach unten fallen. Am unteren Ende der zweiten Förderschnecke 74 ist außerdem ein Behälter 86 vorgesehen, in dem sich die Störstoffe sammeln (Fig. 5). In dem Behälter 86 dreht sich ein zweiarmiger Wischer 88, der die Störstoffe zu einer Öffnung 90 treibt, aus der sie ausgetragen werden (Fig. 6). Die Arme des Wischers 88 sind entgegen der Drehrichtung gebogen, so dass die Störstoffe nach außen befördert werden und dann durch die Öffnung 90 fallen, die im Abstand von der Achse der Welle 80 angeordnet ist.

In regelmäßigen Abständen, zum Beispiel im Abstand von einigen Tagen, werden außerdem Störstoffe, die sich in der Oxidationseinheit angesammelt haben und nicht in dem Spalt zwischen der zweiten Förderschnecke 74 und der Innenwand des Rohrs der zweiten Einheit 72 nach unten gefallen sind, dadurch entfernt, dass die Förderschnecke 73 der ersten Einheit 71 angehalten wird und das gesamte Biomasseinventar innerhalb der Oxidationseinheit 16 und der Reduktionseinheit 18 in Produktgas 22 umgesetzt oder verbrannt wird. Die zweite Förderschnecke 74 wird dann rückwärts angetrieben, so dass eventuell vorhandene Störstoffe nach unten in den Behälter 68 gefördert werden. Dieser Reinigungsvorgang dauert nur wenige Minuten, so dass sich der Vergasungsreaktor nicht wesentlich abkühlt und sehr rasch wieder angefahren werden kann.

**Bezugszeichenliste:**

| | |
|---|---|
| 10 Zuführsystem | 50 Austrageinrichtung |
| 12 Rohmaterial (Holzhackschnitzel) | 52 Störstoffe und Schlacke |
| 14 Pyrolyseeinheit | 54 Trennbereich |
| 16 Oxidationseinheit | 56 Düsen |
| 18 Reduktionseinheit | 58 Förderschnecke |
| 20 Ableitung | 60 Sammelcontainer |
| 22 Produktgas | 62 Stelle |
| 24 Vorlagebehälter | 71 erste Einheit |
| 26 Schleusensystem | 72 zweite Einheit |
| 28 Förderschnecke | 73 erste Förderschnecke |
| 32 Vergasungsreaktor | 74 zweite Förderschnecke |
| 38 Rohr | 76 Ringraum |
| 39 Hohlmantel | 78 Innenwendel |
| 40 Übergang | 80 Welle |
| 42 Öffnungen | 82 Kanal |
| 44 Umgebungsluft | 86 Behälter |
| 46 vertikal beabstandete Ringe | 88 Wischer |
| 48 Bypassleitung | 90 Öffnung |

## Patentansprüche

1. Verfahren zur Gewinnung eines Produktgases (22) durch Vergasen von Biomasse wobei
die Biomasse als Rohmaterial (12) über eine Zuführeinrichtung (10) in einen Vergasungsreaktor (32) gefördert wird, der eine Pyrolyseeinheit (14), eine Oxidationseinheit (16) und eine Reduktionseinheit (18) aufweist;
das Rohmaterial (12) durch die Pyrolyseeinheit (14) gefördert wird und dabei erhitzt wird, so dass es vollständig ausgegast und in die Pyrolyseprodukte umgewandelt wird;
die Pyrolyseprodukte unmittelbar in die Oxidationseinheit (16) gefördert werden, in der sie unter Zuführung eines Vergasungsmittels (44) verbrannt werden;
die Oxidationsprodukte unmittelbar in die Reduktionseinheit (18) gelangen, in der sie in Produktgas (22) umgewandelt werden; und
das Produktgas (22) über eine Ableitung (20) aus dem Vergasungsreaktor (32) abgeführt wird;
**dadurch gekennzeichnet, dass**
das Vergasungsmittel im Zentrum der Oxidationseinheit (16) zugeführt wird.

2. Verfahren nach Anspruch 1, wobei das Produktgas (22) zumindest teilweise zur Erhitzung des Rohmaterials (12) in der Pyrolyseeinheit (14) eingesetzt wird.

3. Verfahren nach Anspruch 1 oder 2, wobei die Temperatur in der Oxidationseinheit (16) erfasst wird und die Förderleistung, mit der die Biomasse durch die Pyrolyseeinheit (14) gefördert wird, erhöht wird, wenn die erfasste Temperatur über einer Soll-Temperatur liegt und umgekehrt.

4. Verfahren nach Anspruch 3, wobei die Soll-Temperatur 1000°C beträgt.

5. Vorrichtung zur Durchführung des Verfahrens nach einem der Ansprüche 1 bis 4
mit einem Vergasungsreaktor (32), der eine Pyrolyseeinheit (14), eine Oxidationseinheit (16), und eine Reduktionseinheit (18) aufweist, die unmittelbar ineinander übergehen;
mit einer Einrichtung (10) für die Zuführung der Biomasse (12) in die Pyrolyseeinheit (14);
mit einer Einrichtung (28; 73, 74) zum Fördern der Biomasse durch die Pyrolyseeinheit (14);
mit einer Einrichtung (42) für die Zuführung eines Vergasungsmittels in die Oxidationseinheit (16); und
mit einer Ableitung (20) zum Abführen des Produktgases (22) aus der Reduktionseinheit (18) des Vergasungsreaktors (32);
**dadurch gekennzeichnet,**
**dass** die Einrichtung (42) für die Zuführung des Vergasungsmittels in die Oxidationseinheit (16) im Zentrum der Oxidationseinheit (16) ausmündet, und die Einrichtung zum Fördern der Biomasse durch die Pyrolyseeinheit (14) eine Förderschnecke (74) mit einer Welle (80) enthält, wobei die Welle (80) hohl ist und dadurch als die Einrichtung (42) für die Zuführung des Vergasungsmittels im Zentrum der Oxidationseinheit (16) fungiert,
wobei die Pyrolyseeinheit (14) ein doppelwandiges Rohr (38) mit einem ringförmigen Hohlmantel (39; 76) aufweist, die Förderschnecke (28; 73) in dem Rohr (38) drehbar angeordnet ist und das Produktgas (22) durch den ringförmigen Hohlmantel (39; 76) geleitet wird.

6. Vorrichtung nach Anspruch 5, wobei die Einrichtung (10) zum Fördern der Biomasse durch die Pyrolyseeinheit (14) eine erste und eine zweite Fördereinheit (71, 72) aufweist, die jeweils eine Förderschnecke (73, 74) aufweisen, wobei die erste Fördereinheit (71) in die zweite Fördereinheit (72) und die zweite Fördereinheit (72) in die Oxidationseinheit (16) mündet und die Schnecke (74) der zweiten Fördereinheit (72) die Hohlwelle (80) aufweist.

7. Vorrichtung nach einem der Ansprüche 5 bis 6, mit einer Austrageinrichtung (50) zum Austrag von Störstoffen und Schlacke (52) aus dem Vergasungsreaktor (32).

8. Vorrichtung nach Anspruch 7, wobei die Austrageinrichtung (50) einen Sammelbereich (54) aufweist und eine Fördereinrichtung (58), mit der die Störstoffe und die Schlacke (52) aus dem Sammelbereich (54) herausgefördert werden.

9. Vorrichtung nach einem der Ansprüche 5 bis 8, **gekennzeichnet durch** eine Steuerungseinrichtung, die die Temperatur in der Oxidationseinheit (16) erfasst und die Förderleistung der Fördereinrichtung der Biomasse durch die Pyrolyseeinheit (14) erhöht, wenn die erfasste Temperatur über einer Soll-Temperatur liegt und umgekehrt.

10. Vorrichtung nach Anspruch 9, wobei die Soll-Temperatur 1000°C beträgt.

## Claims

1. Method for producing a product gas (22) by gasifying biomass wherein
the biomass as raw material (12) is conveyed via a supply device (10) into a gasification reactor (32), which has a pyrolysis unit (14), an oxidation unit (16) and a reduction unit (18);
the raw material (12) is conveyed through the pyrolysis unit (14) and heated in the process, with the result that it is completely degassed and is converted into the pyrolysis products;
the pyrolysis products are conveyed directly into the oxidation unit (16), in which they are burnt while a gasification agent (44) is supplied;
the oxidation products arrive directly in the reduction unit (18), in which they are converted into product gas (22); and
the product gas (22) is discharged from the gasification reactor (32) via a discharge pipe (20);
**characterized in that**
the gasification agent is supplied in the centre of the oxidation unit (16).

2. Method according to claim 1, wherein the product gas (22) is, at least in part, used to heat the raw material (12) in the pyrolysis unit (14).

3. Method according to claim 1 or 2, wherein the temperature in the oxidation unit (16) is recorded and the conveying capacity, with which the biomass is conveyed through the pyrolysis unit (14), is increased when the recorded temperature lies above a target temperature and vice versa.

4. Method according to claim 3, wherein the target temperature is 1000°C.

5. Device for carrying out the method according to one of claims 1 to 4
with a gasification reactor (32), which has a pyrolysis unit (14), an oxidation unit (16) and a reduction unit (18), which merge directly into each other;
with a device (10) for supplying the biomass (12) into the pyrolysis unit (14);
with a device (28; 73, 74) for conveying the biomass through the pyrolysis unit (14);
with a device (42) for supplying a gasification agent into the oxidation unit (16); and
with a discharge pipe (20) for discharging the product gas (22) from the reduction unit (18) of the gasification reactor (32);
**characterized in that**
the device (42) for supplying the gasification agent into the oxidation unit (16) opens out in the centre of the oxidation unit (16), and the device for conveying the biomass through the pyrolysis unit (14) contains a screw conveyor (74) with a shaft (80), wherein the shaft (80) is hollow and thereby functions as the device (42) for supplying the gasification agent in the centre of the oxidation unit (16),
wherein the pyrolysis unit (14) has a double-walled pipe (38) with a ring-shaped hollow casing (39; 76), the screw conveyor (28; 73) is rotatably arranged in the pipe (38) and the product gas (22) is guided through the ring-shaped hollow casing (39; 76).

6. Device according to claim 5, wherein the device (10) for conveying the biomass through the pyrolysis unit (14) has a first and a second conveying unit (71, 72), which each have a screw conveyor (73, 74), wherein the first conveying unit (71) opens into the second conveying unit (72) and the second conveying unit (72) opens into the oxidation unit (16) and the screw (74) of the second conveying unit (72) has the hollow shaft (80).

7. Device according to one of claims 5 to 6, with a discharge device (50) for discharging impurities and ash (52) from the gasification reactor (32).

8. Device according to claim 7, wherein the discharge device (50) has a collection area (54) and a conveying device (58), with which the impurities and the ash (52) are conveyed out of the collection area (54).

9. Device according to one of claims 5 to 8, **characterized by** a control device, which records the temperature in the oxidation unit (16) and increases the conveying capacity of the conveying device of the biomass through the pyrolysis unit (14) when the recorded temperature lies above a target temperature and vice versa.

10. Device according to claim 9, wherein the target temperature is 1000°C.

## Revendications

1. Procédé de production d'un gaz produit (22) par gazéification d'une biomasse, où
la biomasse en tant que matière brute (12) est transportée, par le biais d'un dispositif d'alimentation (10), dans un réacteur de gazéification (32) qui présente une unité de pyrolyse (14), une unité d'oxydation (16) et une unité de réduction (18) ;
la matière brute (12) est transportée au travers de l'unité de pyrolyse (14) et chauffée lors de ce processus, ce qui résulte en son dégazage total et sa conversion en produits de pyrolyse ;
les produits de pyrolyse sont transportés directement dans l'unité d'oxydation (16), dans laquelle ils sont brûlés tandis qu'un agent de gazéification (44) est fourni ;
les produits d'oxydation arrivent directement dans l'unité de réduction (18), dans laquelle ils sont convertis en un gaz produit (22) ; et
le gaz produit (22) est libéré du réacteur de gazéification (32) par le biais d'une conduite de décharge (20) ;
**caractérisé en ce que**
l'agent de gazéification est fourni au centre de l'unité d'oxydation (16).

2. Procédé selon la revendication 1, où le gaz produit (22) est, au moins en partie, utilisé pour chauffer la matière brute (12) dans l'unité de pyrolyse (14).

3. Procédé selon la revendication 1 ou 2, où la température dans l'unité d'oxydation (16) est enregistrée et où la capacité de transport, avec laquelle la biomasse est transportée au travers de l'unité de pyrolyse (14), est augmentée quand la température enregistrée se situe en dessus d'une température cible, et vice-versa.

4. Procédé selon la revendication 3, où la température cible est 1 000 °C.

5. Dispositif pour effectuer le procédé selon l'une des revendications 1 à 4
doté d'un réacteur de gazéification (32) qui présente une unité de pyrolyse (14), une unité d'oxydation (16) et une unité de réduction (18) qui débouchent directement les unes dans les autres ;
doté d'un dispositif (10) d'alimentation de la biomasse (12) dans l'unité de pyrolyse (14) ; doté d'un dispositif (28 ; 73, 74) de transport de la biomasse au travers de l'unité de pyrolyse (14) ;
doté d'un dispositif (42) d'alimentation en un agent de gazéification dans l'unité d'oxydation (16) ; et
doté d'une conduite de décharge (20) pour libérer le gaz produit (22) de l'unité de réduction (18) du réacteur de gazéification (32) ;
**caractérisé en ce que**
le dispositif (42) d'alimentation en l'agent de gazéification dans l'unité d'oxydation (16) débouche au centre de l'unité d'oxydation (16) et le dispositif de transport de la biomasse au travers de l'unité de pyrolyse (14) contient un transporteur à vis sans fin (74) doté d'un arbre (80), où l'arbre (80) est creux et sert ainsi de dispositif (42) d'alimentation en l'agent de gazéification au centre de l'unité d'oxydation (16),
où l'unité de pyrolyse (14) a une conduite à double paroi (38) dotée d'une gaine creuse de forme annulaire (39 ; 76), le transporteur à vis sans fin (28 ; 73) est disposé de façon à pouvoir tourner dans la conduite (38) et le gaz produit (22) est guidé au travers de la gaine creuse de forme annulaire (39 ; 76).

6. Dispositif selon la revendication 5, où le dispositif (10) de transport de la biomasse au travers de l'unité de pyrolyse (14) présente une première et une deuxième unités de transport (71, 72) qui sont chacune dotées d'un transporteur à vis sans fin (73, 74), où la première unité de transport (71) débouche dans la deuxième unité de transport (72) et la deuxième unité de transport (72) débouche dans l'unité d'oxydation (16) et la vis (74) de la deuxième unité de transport (72) présente l'arbre creux (80).

7. Dispositif selon l'une des revendications 5 à 6, doté d'un dispositif d'évacuation (50) pour évacuer les impuretés et la cendre (52) du réacteur de gazéification (32).

8. Dispositif selon la revendication 7, où le dispositif d'évacuation (50) présente une zone de collecte (54) et un dispositif de transport (58) avec lequel les impuretés et la cendre (52) sont transportées hors de la zone de collecte (54).

9. Dispositif selon l'une des revendications 5 à 8, **caractérisé par** un dispositif de régulation qui enregistre la température dans l'unité d'oxydation (16) et augmente la capacité de transport du dispositif de transport de la biomasse au travers de l'unité de pyrolyse (14) quand la température enregistrée se situe en dessus d'une température cible, et vice-versa.

10. Dispositif selon la revendication 9, où la température cible est 1 000 °C.
